# EUROPEAN PATENT APPLICATION

(11) **EP 2 792 468 A1**
(43) Date of publication of application: **22.10.2014**
(21) Application number: 13425057.0
(22) Date of filing: 19.04.2013
(51) Int. Cl.: B29C 51/02, B29C 51/16

(54) **Lining system**

(71) Applicant: Mondini, Giovanni, 25033 Cologne Bresciano (IT)
(72) Inventor: Mondini, Giovanni, 25033 Cologne Bresciano (IT)
(74) Representative: Gandini, Claudio

(57) **Abstract**

This invention is intended to manage mainstream packaging lines, including thermoforming (6), of elements that are partially rigid or flexible or with an extremely thin thickness (3). This innovation is possible by using a rigid support (2), which is not interconnected with the other rigid supports, containing semi-rigid or flexible or extremely thin elements.

## Description

In mainstream sealing machines for food and non-food preformed containers, supports or containers have to be rigid enough to be handled by operators on belts, conveyors, loading systems and the like.

Machines managing the sealing of flexible and/or semi-rigid elements from the coil are available on the market. They incorporate elements that are not separated from the coil until they are sealed.

This invention is intended to handle, with traditional packaging lines, elements that are partially rigid, namely, flexible or extremely thin, such as plastic film.

The innovation consists in a rigid support (2), which is not connected to the other rigid supports and contains semi-rigid or flexible or extremely thin elements (1). This invention also intends to thermoform the flexible element (1), if necessary, within the rigid support (2), according to the traditional systems.

The innovation disclosed in this invention makes it possible to handle these elements, introducing a rigid support (2) that plays a double role:
a. It is the female in the thermoforming process of the support that will convey the product;
b. It makes it possible to handle this thermoformed, flexible or semi-rigid flat element within mainstream packing systems, such as belts, loading systems, tray sealing machines.

Basically, the preformed flat element in flexible or semi-rigid material is manually located or mechanically moved onto the rigid support in variable material. In case of a flexible or semi-rigid support from a coil (3), it is cut by means of a specific cutting unit (4). In case of thermoforming process, where the rigid support serves as a female element, this process occurs immediately after cutting and positioning the element on the rigid support (2). After the flexible or semi-rigid element (1) is loaded and, if necessary, thermoformed on the rigid support (2), the latter is handled as a standard preformed container.

The system includes the following stages: accumulation and unstacking of stacks of rigid supports; manual or mechanical introduction by the operator of flat or semi-rigid elements on rigid supports; cutting, if provided; thermoforming of the flexible element (1) on the rigid support (2), if any; loading of products; sealing and finally unloading from the rigid support of the sealed element.

At this point, the rigid element can be used again to restart the process from the beginning.

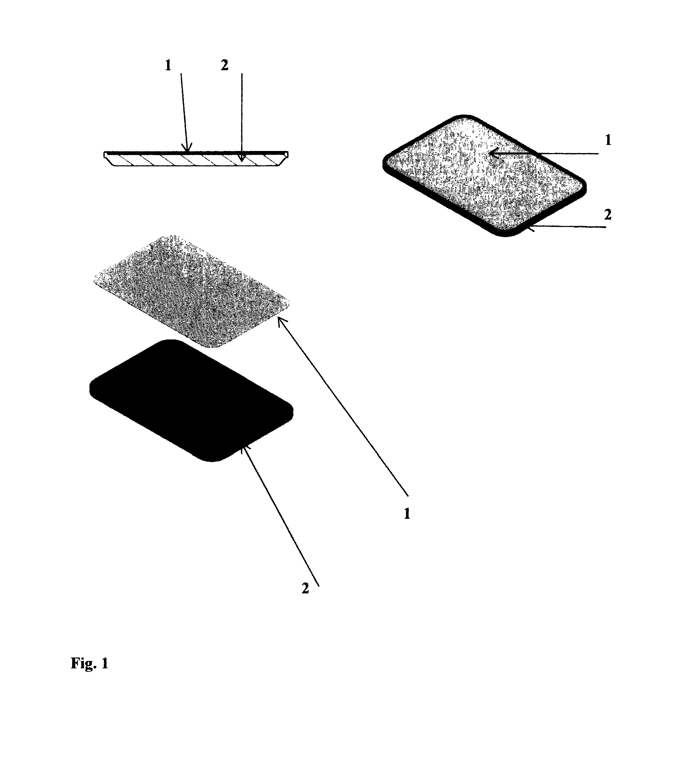

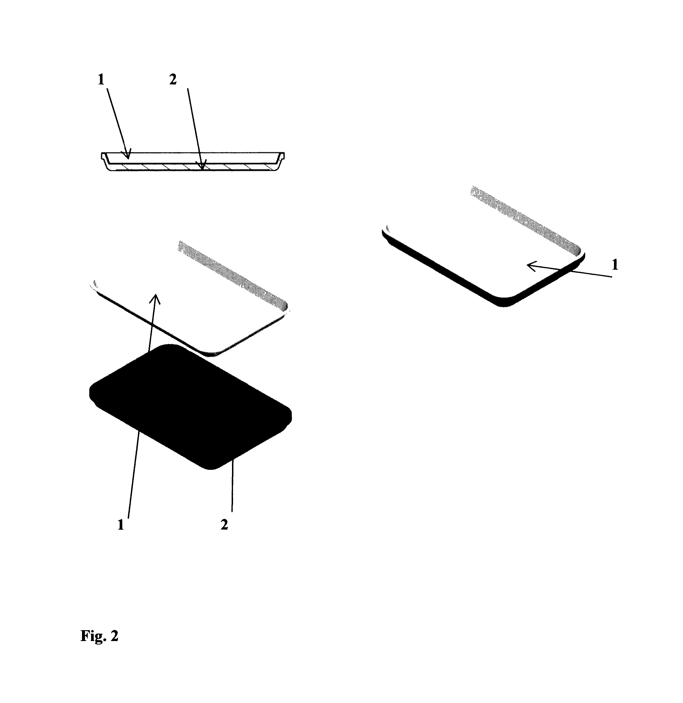

Figure 1 shows the flexible or semi-rigid element (1) and the rigid element (2). The flexible or semi-rigid element (1) is located on the rigid support (2). Figure 2 shows the flexible or semi-rigid element (1) located on the rigid support (2) so that thermoforming is possible. Exactly, the flexible or semi-rigid element (1) is shown already thermoformed.

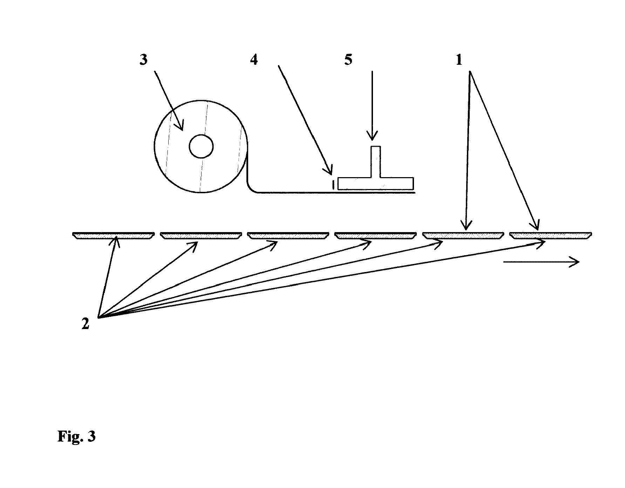

Figure 3 shows rigid supports (2) in a single line, the coil (3) made up of flexible material, the cutting unit (4) and the positioning unit (5) locating the flexible or semi-rigid element. The flexible or semi-rigid element (1) is positioned on the rigid support (2).

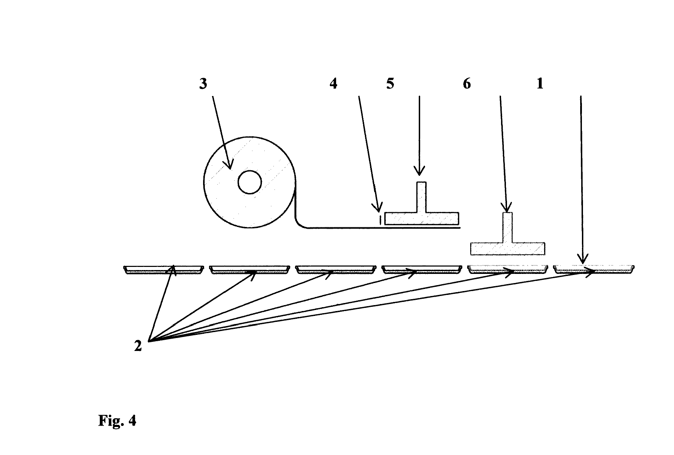

Figure 4 shows again the rigid supports (2) in a single line, the coil (3) of flexible material, the cutting unit (4), the positioning unit (5) and the thermoforming unit (6). The flexible element (1) is thermoformed in contact with the rigid support (2).

## Claims

1. A packaging system **characterised by** a flexible or semi-rigid or extremely thin element (1) located on a rigid support (2) to enable the progress of loading and sealing within traditional container sealing machines, featuring:
1. A rigid support (2), which can enable thermoforming of flexible elements, previously cut or coming from a coil (3) and also use of traditional container sealing machines;
2. The rigid support (2) can contain semi-rigid or extremely thin elements, previously cut or coming from a coil (3).
3. The flexible or semi-rigid or extremely thin element (1) can be manually or mechanically loaded on the rigid support (2). In case of mechanical loading, it is possible to install a coil (3), a cutting unit (4) and a positioning unit (5) as well as a thermoforming unit (6).
